# EUROPEAN PATENT APPLICATION

(11) **EP 2 373 117 A1**
(43) Date of publication of application: **05.10.2011**
(21) Application number: 08879200.7
(22) Date of filing: 26.12.2008
(51) Int. Cl.: H04W 92/08, H04W 4/04, H04W 76/02

(54) **CONNECTION MANAGEMENT DEVICE, COMMUNICATION TERMINAL, CONNECTION MANAGEMENT METHOD, CONNECTION METHOD, CONNECTION MANAGEMENT PROGRAM, CONNECTION PROGRAM, AND RECORDING MEDIUM**

(71) Applicant: Pioneer Corporation, Kanagawa 212-0031 (JP)
(72) Inventor: UCHIYAMA, Koichiro, Tokyo 153-8654 (JP); TAHARA, Kazushi, Tsurugashima-shi Saitama 350-2288 (JP)
(74) Representative: Haley, Stephen
(86) International application number: PCT/JP2008/073844
(87) International publication number: WO 2010/073405

(57) **Abstract**

In a communication system (100), an access management apparatus (110) acquires information (hereinafter, "access information") that is used in accessing a local network (140), performs authentication processing on a portable storage device (130) that has uniquely assigned identification information, and stores the access information to a storage device (130). If the identification information is acquirable from the storage device (130), a communication terminal (120) uses the access information acquired from the storage device (130) to access the local network (140).

## Description

### TECHNICAL FIELD

The embodiments discussed herein are related to an access management apparatus, an access management method, an access management program, and a recording medium for managing access to a local network via a wide area network. The embodiments are related to a communication terminal, an access method, an access program, and a recording medium for accessing a local network via a wide area network. However, application of the present invention is not limited to the access management apparatus, the communication terminal, the access management method, the access method, the access management program, the access program, and the recording medium.

### BACKGROUND ART

It is known that a user accesses a local network such as a home network via a wide area network such as an internet, controls devices in the local network, and uses, outside the local network, data accumulated in the devices in the local network (see for example Patent Document 1 below). According to Patent Document 1, when a remote mode is selected in a mobile telephone, operation information on multiple home electric appliances corresponding to the remote mode is transmitted to a residential gateway, the operation information having been registered in an ASP server. The residential gateway runs all the home electric appliances based on the operation information.

Patent Document 1: Japanese Laid-Open Patent Application Publication No. 2008-283433

### DISCLOSURE OF INVENTION

### PROBLEM TO BE SOLVED BY THE INVENTION

However, when the user accesses the local network via the wide area network as disclosed in the above conventional art, it is possible that someone may illicitly access the local network from outside if addresses in the local network are made public. Therefore, before the connection to the local network is established, generally an access control or an address conversion is performed so that the connection from outside cannot easily be established. In other words, when the user tries to access the local network, settings of, for example, a gateway are required, and knowledge of the settings and information on the network are required.

One alternative is the use of a connection server but this requires the user to perform various settings and directly input IDs and passwords, which is troublesome. As can be seen, when security is taken into consideration, one problem is that users cannot easily access the local network from outside.

### MEANS FOR SOLVING PROBLEM

To solve the problems above and achieve an object, an access management apparatus according to the invention of claim 1 manages access to a local network via a wide area network and includes an access information acquiring unit configured to acquire information (hereinafter "access information") that is used at access to the local network; an authenticating unit configured to perform an authentication process for a portable storage device; and a recording unit configured to store the access information acquired by the access information acquiring unit in a storage device authenticated by the authenticating unit.

Further, a communication terminal according to the invention of claim 3 accesses a local network via a wide area network and includes an access information acquiring unit configured to acquire information (hereinafter "access information") that is stored in a portable storage device and is used at access to the local network; an identification information acquiring unit configured to acquire identification information uniquely assigned to the storage device; and an access unit configured to access the local network using the access information acquired by the access information acquiring unit and the identification information acquired by the identification information acquiring unit.

An access management method according to the invention of claim 9 is for managing access to a local network via a wide area network and includes acquiring information (hereinafter "access information") used at access to the local network; authenticating a portable storage device; and storing the access information acquired at the acquiring in a storage device authenticated at the authenticating.

An access method according to the invention of claim 10 is for accessing a local network via a wide area network and includes acquiring from a portable storage device information (hereinafter "access information") used at access to the local network; acquiring from the storage device identification information uniquely assigned to the storage device; and accessing the local network using the access information and the identification information.

An access management program according to the invention of claim 11 causes a computer to execute the access management method of claim 9.

An access management program according to the invention of claim 12 causes a computer to execute the access method of claim 10.

A computer-readable recording medium according to the invention of claim 13 stores therein the access management program of claim 11 or the access management program of claim 12.

### BRIEF DESCRIPTION OF DRAWINGS

FIG. 1 is a block diagram depicting a functional configuration of a communication system according to an embodiment;
FIG. 2 is a flowchart illustrating an access management process executed by an access manager in an access management system;
FIG. 3 is a flowchart illustrating an access process executed by a communication terminal in an access management system;
FIG. 4 is a diagram of a configuration of the communication system according to an example;
FIG. 5 is a block diagram depicting a hardware configuration of a mobile device;
FIG. 6 is a flowchart illustrating a process executed at a residential gateway;
FIG. 7 is a flowchart illustrating a process executed at the first access of the mobile device to a tag; and
FIG. 8 is a flowchart illustrating a process for the mobile device to access to a home network.

### EXPLANATIONS OF LETTERS OR NUMERALS

- 100: communication system
- 110: access manager
- 111: acquiring unit
- 112: authenticating unit
- 113: recording unit
- 120: communication terminal
- 121: access information acquiring unit
- 122: recording unit
- 123: access information acquiring unit
- 124: access unit
- 130: storage device
- 140: local network
- 150: wide area network

### BEST MODE(S) FOR CARRYING OUT THE INVENTION

With reference to the accompanying drawings, preferred embodiments of an access management apparatus, a communication terminal, an access management method, an access method, an access management program, an access program, and a recording medium will be explained in detail.

### (Embodiment)

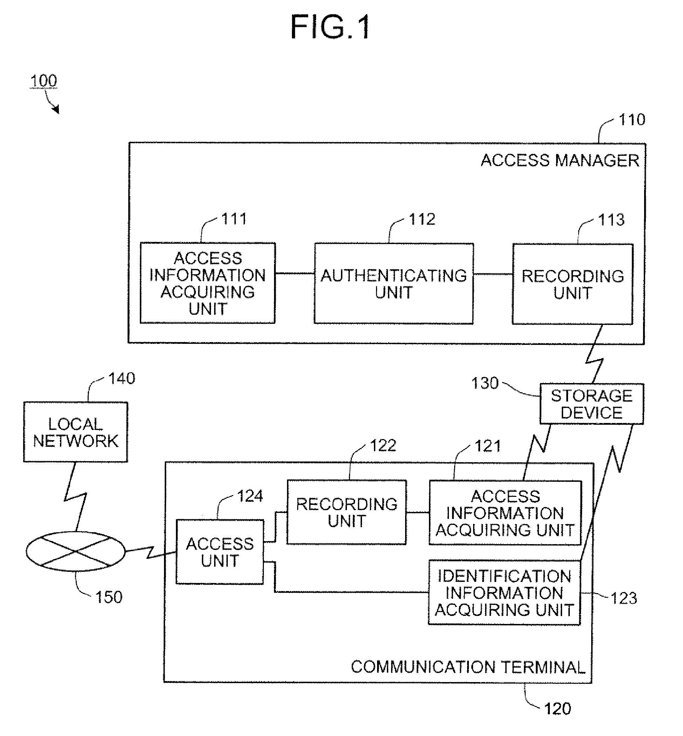

FIG. 1 is a block diagram depicting a functional configuration of a communication system according to an embodiment. A communication system 100 enables access to a local network 140 via a wide area network 150 from outside. The communication system 100 includes an access manager 110 that manages access to the local network 140 via the wide area network 150, a communication terminal 120 that accesses the local network 140 via the wide area network 150, and a portable storage device 130.

The access manager 110 includes an access information acquiring unit 111, an authenticating unit 112, and a recording unit 113. The access information acquiring unit 111 acquires information (hereinafter "access information") used in accessing the local network 140. The access information is, for example, information on addresses of devices within the local network 140, information on authentication used in accessing the local network 140, and an encryption key used in encrypted communication with the local network 140.

The authenticating unit 112 conducts an authentication process for the storage device 130. The authentication process conducted by the authenticating unit 112 aims to confirm whether the storage device 130 is being used by those who have authority to access the local network 140.

The recording unit 113 stores the access information acquired by the access information acquiring unit 111 to the storage device 130 authenticated by the authenticating unit 112.

The communication terminal 120 includes an access information acquiring unit 121, a recording unit 122, an access information acquiring unit 123, and an access unit 124. The access information acquiring unit 121 acquires the access information that is stored in the storage device 130 and is used to access the local network 140. In other words, the access information acquiring unit 121 reads out the access information stored in the storage device 130. The recording unit 122 stores the access information acquired by the access information acquiring unit 121.

The access information acquiring unit 123 acquires from the storage device 130 identification information uniquely assigned to the storage device 130. The access information acquiring unit 123 acquires the identification information, for example, by near field communication with the storage device 130.

The access unit 124 accesses the local network 140 using the access information acquired by the access information acquiring unit 121 and the identification information acquired by the access information acquiring unit 123. In other words, the access unit 124 accesses the local network 140 using the access information if the identification information can be acquired from the storage device 130 by near field communication, and does not access the local network 140 if the identification information cannot be acquired. The access unit 124 also accesses the local network 140 using the access information stored in the recording unit 122.

If the communication terminal 120 is equipped in a vehicle, the access information acquiring unit 123 further acquires, from a key, identification information uniquely assigned to the key. When identification information can be obtained from both the storage device 130 and the key, the access unit 124 accesses the local network 140 using the access information. If the identification cannot be acquired, the access unit 124 does not access the local network 140.

The access information acquiring unit 121 may acquire from multiple storage devices 130, access information used to access different local networks 140. In this case, the access information acquiring unit 123 acquires identification information uniquely assigned to the multiple storage devices 130. The access unit 124 accesses the multiple local networks 140 if the identification information of the multiple storage devices 130 can be acquired by near field communication.

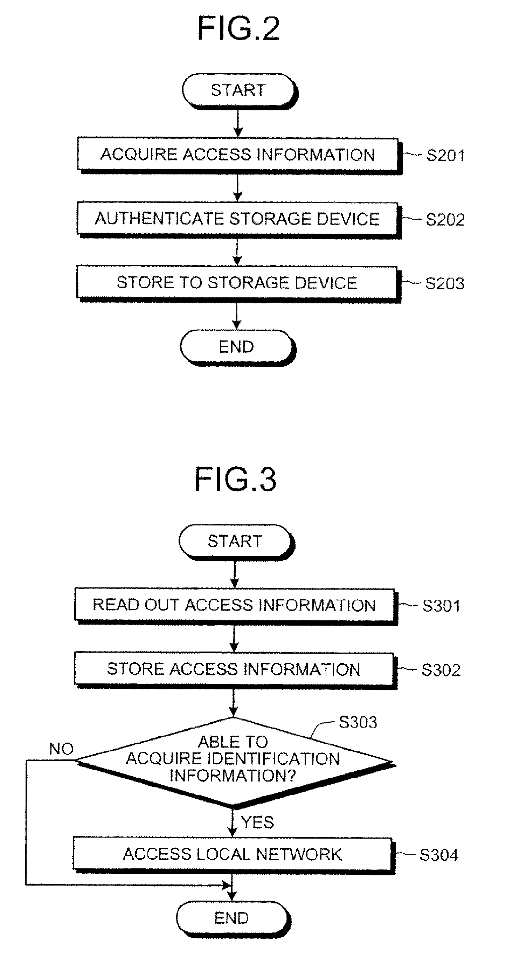

FIG. 2 is a flowchart illustrating an access management process executed by an access manager in an access management system. In the flowchart of FIG. 2, the access manager 110 acquires, via the access information acquiring unit 111, access information for accessing the local network 140 (step S201). The authenticating unit 112 authenticates the portable storage device 130 (S202). The storage device 130 stores the access information acquired at step S201 (step S203) and the process of this flowchart ends.

FIG. 3 is a flowchart illustrating an access process executed by a communication terminal in an access management system. In the flowchart of FIG. 3, the communication terminal 120, via the access information acquiring unit 121, reads out the access information that is for accessing the local network 140 and is stored in the storage device 130 (step S301) and stores the access information in the recording unit 122 (step S302).

The communication terminal 120 determines whether identification information of the storage device 130 can be acquired via the access information acquiring unit 123 (step S303). If the identification information can be acquired (step S303: YES), the communication terminal 120 accesses the local network 140 using the access information stored in the recording unit 122 (step S304) and the process of this flowchart ends. If the identification information cannot be acquired (step S303: NO), the communication terminal 120 does not access the local network 140 and the process of this flowchart ends.

As explained above, according to the communication system 100, the communication terminal 120 can access the local network 140 only when the identification information of the storage device 130 can be obtained. In other words, when communication between the communication terminal 120 and the storage device 130 can be established, a user of the communication terminal 120 is considered to be a qualified user who is allowed to access the local network 140. In this way, access to the local network 140 via the wide area network 150 is enabled without a complicated authentication process.

In addition, in the communication system 100, the access information is automatically obtained by the access manager 110 and is stored in the storage device 130 so that a user can obtain the access information without a bothersome process. Further, according to the communication system 100, when the communication terminal 120 is on board, the communication terminal 120 is not allowed to access the local network 140 unless identification information uniquely assigned to a key of the vehicle is acquired. In this way, unauthorized access to the local network 140 is prevented.

### Example

An example of the embodiments is explained below. In this example, the access manager 110 is replaced with a residential gateway 442, the communication terminal 120 is replaced with a mobile device 410 such as a navigation apparatus that is portable and can establish communication, and the portable storage device 130 is replaced with a tag 420.

### (Configuration of communication system)

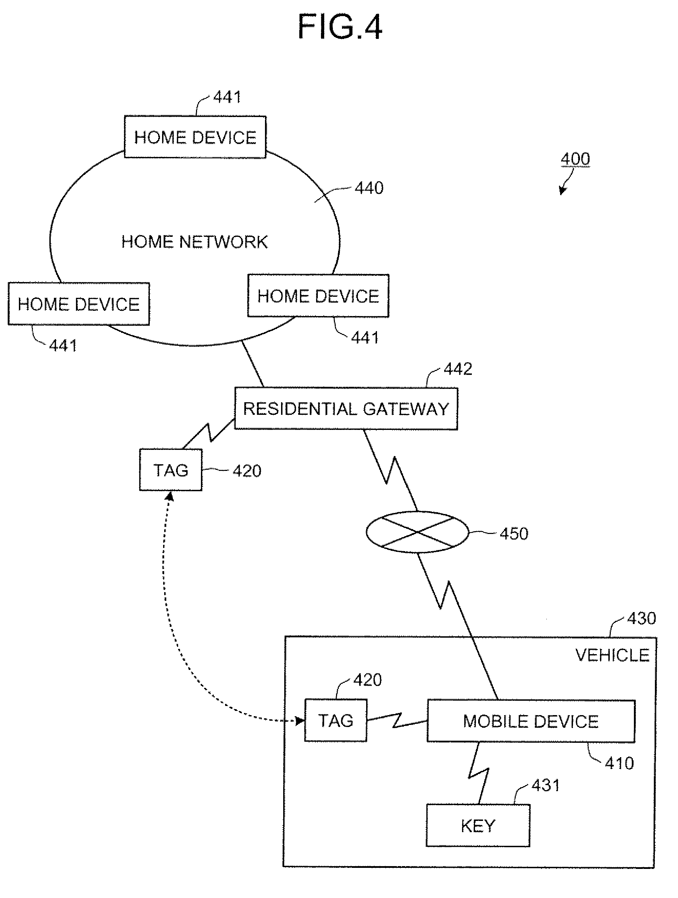

A configuration of a communication system according to this example is explained. FIG. 4 is a diagram explaining the configuration of the communication system according to this example. In FIG. 4, a communication system 400 allows connection to a home network 440 from outside via a wide area network 450.

The home network 440 is a local network to which multiple home devices 441 are connected. A home device 441 is, for example, a content server that stores content data obtained by a user or a network-connected home appliance. The residential gateway 442 manages access to the home network via the wide area network 450. Specifically, software for connection setup is installed in the residential gateway 442. The residential gateway 442 may be one device or be implemented as one function of a device (for example, a personal computer) having other functions.

The mobile device 410 is, for example, a device such as a navigation apparatus and an audio device as depicted in FIG. 4 that are equipped in a vehicle 430, and various kinds of devices that is carried by the user. The mobile device 410 accesses the home network 440 using a communication function and establishes communication with home devices 441. Communication between the mobile device 410 and a home device 441 enables the viewing of content data stored in the home device 441 for example in the vehicle 430 and operation of the home device 441 using the mobile device 410. A key 431 of the vehicle 430 is given an ID that uniquely identifies the key.

The tag 420 is a portable device having an ID for uniquely identifying the tag and a storage area to store information. As the tag 420, a mobile phone having an IC chip may be used as well as a dedicated device. Connection between the tag 420 and the residential gateway 442 and between the tag 420 and the mobile device 410 may be physical or logical. The connection between the tag 420 and the residential gateway 442 and between the tag 420 and the mobile device 410 is performed by near field connection such as Bluetooth (registered trademark) or with USB terminals.

Access to the home network 440 by the mobile device 410 is performed with the tag 420. In more detail, the residential gateway 442 collects information (access-related information) needed to connect to the home network 440 and the collected information is written into the tag 420. Since the tag 420 is portable, the tag 420 can be detached from the residential gateway 442 and brought into the vehicle 430.

If the mobile device 410 can communicate with the tag 420 (namely if the tag 420 is brought into the vehicle 430), the mobile device 410 accesses the home network 440 using the access-related information written to the tag 420. To authenticate a person who has brought the tag 420 into the vehicle, the mobile device 410 performs authentication using the ID given to the key 431 and only when the authentication is affirmative, the mobile device 410 accesses the home network 440. In this way, a user is relieved from making complicated settings and can access the home network 440 from the mobile device 410.

### (Hardware configuration)

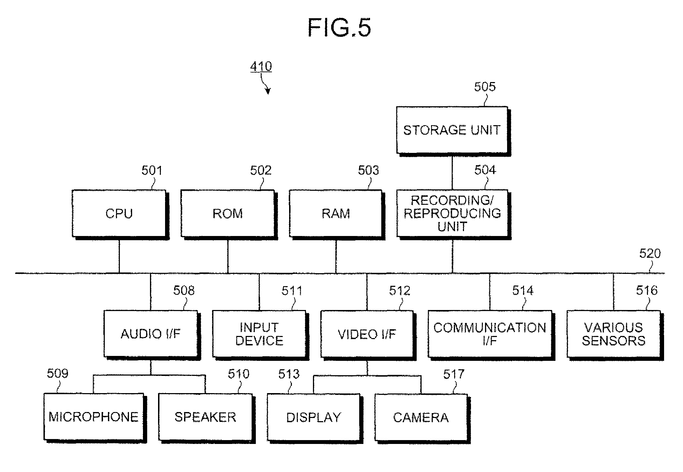

A hardware configuration of the mobile device 410 and the residential gateway 442 is explained. FIG. 5 is a block diagram depicting a hardware configuration of the mobile device. In FIG. 5, the mobile device 410 includes a CPU 501, a ROM 502, a RAM 503, a recording/reproducing unit 504 that stores/reproduces various data, a storage unit 505 that stores various data, an audio I/F 508, a microphone 509, a speaker 510, an input device 511, a video I/F 512, a display 513, a communication I/F 514, various sensors 516, and a camera 517, respectively connected by a bus 520.

The CPU 501 governs overall control of the mobile device 410. The ROM 502 stores therein various programs such a boot program and a data updating program. The RAM 503 is used as a work area of the CPU 501. Namely, the CPU 501, using the RAM 503 as a work area, executes various programs stored in the ROM 502 and governs overall control of the mobile device 410.

The recording/reproducing unit 504 controls the reading and writing of data with respect to the storage unit 505, under the control of the CPU 501. The storage unit 505 stores data written under the control of the recording/reproducing unit 504. The recording\reproducing unit is, for example, a magnetic disk drive. The storage unit is, for example, a HD (hard disk), an FD (flexible disk), a flash memory, an MO, a SSD (solid state disk), or a memory card.

One example of information stored in the storage unit 505 is content data or map data. Content data is, for example, music data, still image data, or moving image data. The map data includes background data representing features such as buildings, rivers, and land surfaces, and road shape data representing the shape of roads. The map data is divided by region and into multiple data files.

The audio I/F 508 is connected to the microphone 509 for audio input and the speaker 510 for audio output. Sounds captured by the microphone 509 are A/D-converted in the audio I/F 508. The microphone 509 is installed, for example, near the sun visor of the vehicle. The number of microphones may be one or more. The speaker 510 outputs sounds based on an audio signal that has been D/A-converted in the audio I/F 508.

The input device 511 includes a remote controller, a key board, a touch panel and that the like which include keys for entering characters, numeric values, and various instructions. The input device 511 may be implemented by one among a remote controller, a key board, and a touch panel, or a combination thereof.

The video I/F 512 is connected to the display 512. The video I/F 512 includes, for example, a graphic controller that controls the entire display 513, a VRAM (Video RAM) that temporarily stores immediately displayable image information, and a control IC that controls the display 513 based on image data output from the graphic controller.

The display 513 displays icons, cursors, menus, windows, or various data such as text and images. The map data is drawn two- or three-dimensionally on the display 513. The display 513 may be a CRT, a TFT liquid crystal display, or a plasma display.

The communication I/F 514 is wirelessly connected to a network and works as an interface between the mobile device 410 and the CPU 501. The communication I/F 514 is also wirelessly connected to a communication network such as the Internet and works as an interface between the communication network and the CPU 501.

The various sensors 516 may include a vehicle velocity sensor, an acceleration sensor, and an angular velocity sensor, and output information used to determine a position or a behavior of the vehicle 430. Output from the various sensors 516 is used by the CPU 501 to calculate the current position or a variation in the speed or direction of the vehicle 430.

The camera 517 shoots an image inside or outside the vehicle 430. The image may be a still image or a moving image. The camera 517 captures the behavior of persons in the vehicle 430 as an image and outputs the image via the video I/F 512 to a recording medium such as the storage unit 505.

The residential gateway 442 includes at least the CPU 501, the ROM 502, the RAM 503, the recording/reproducing unit 504, the storage unit 505, and the communication I/F 514 among the components depicted in FIG. 5.

Respective components of the access manager 110 and the communication terminal 120 depicted in FIG. 1 are implemented by the CPU 510, which executes a given program and controls each component using programs and data stored in the ROM 502, the RAM 503, and the storage unit 505 in FIG. 5.

### (Connection process in the communication system 400)

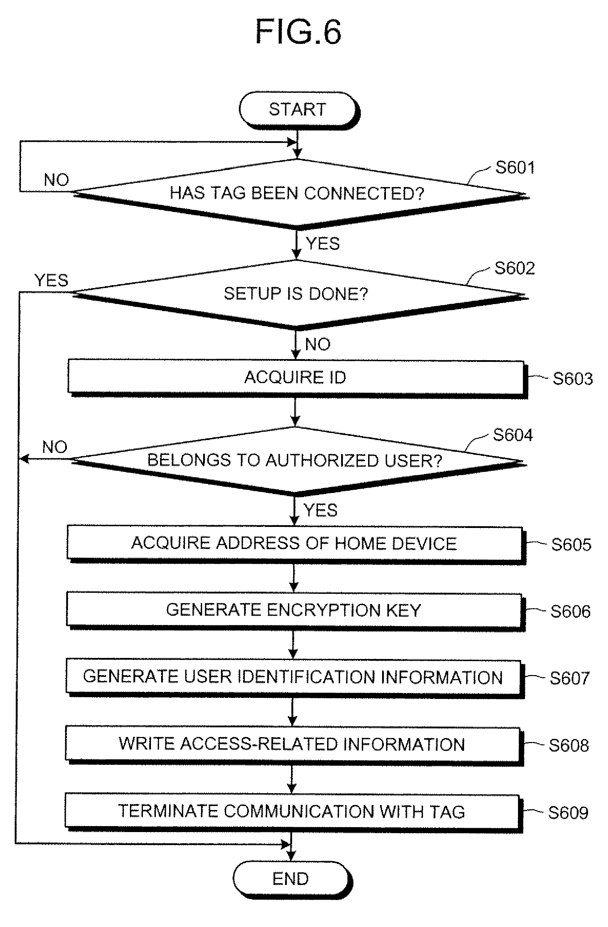

A connection process in the communication system 400 is explained. To begin with, a process in the residential gateway 442, more specifically a process of the residential gateway 442 having the tag 420 record the access-related information, is explained. FIG. 6 is a flowchart illustrating a process in the residential gateway. As mentioned above, software for connection setup is installed in the residential gateway 442.

According to the flowchart of FIG. 6, the residential gateway 442 waits until the tag 420 is connected to the residential gateway 442 (step S601: NO). When the tag 420 is connected (step S601: YES), the residential gateway 442 boots the software for connection setup and determines whether a setup for the home network 440 has been performed in the tag 420 (step S602). If the setup has been performed (step S602: YES), the process of this flowchart ends since setup is not necessary.

If the setup has not been performed (step S602: NO), the residential gateway 442 reads out an ID uniquely assigned to the tag 420 (step S603) and determines whether the tag belongs to an authorized user (step S604). The authorized user is a user who has authority to access the home network 440. If the tag is not that of an authorized user (step S604: NO), the process of this flowchart ends.

If the tag 420 belongs to an authorized user (step S604: YES), the residential gateway 442 acquires address information concerning the home devices 441 in the home network 440 (step S605). Specifically, the residential gateway 442 accesses an address resolution server (not shown) and acquires the address information concerning the home devices 441. The acquired address information is stored to a secure area of the residential gateway 442.

The residential gateway 442 also generates an encryption key used in accessing the home network 440 (step S606) . The encryption key is used as a password to authenticate a person trying to access the home network 440 and may also be used as a key for encryption of communication between the home network 440 and the mobile device 410. After the encryption key is generated, a self-certified certificate corresponding to the encryption key may be created. The residential gateway 442 further generates user identification information for identifying a user (step S607). The encryption key generated at step S606 and the user identification information generated at step S607 are stored to a secure area of the residential gateway 442.

The residential gateway 442 writes the address information, the encryption key, and the user information (hereinafter "access-related information") to a secure area of the tag 420 (step S608) and disconnects from the tag 420(step S609), ending the process of this flowchart.

A process in the mobile device 410, namely a process of acquiring the access-related information at the first access and a process of accessing the home network at the subsequent accesses, is explained.

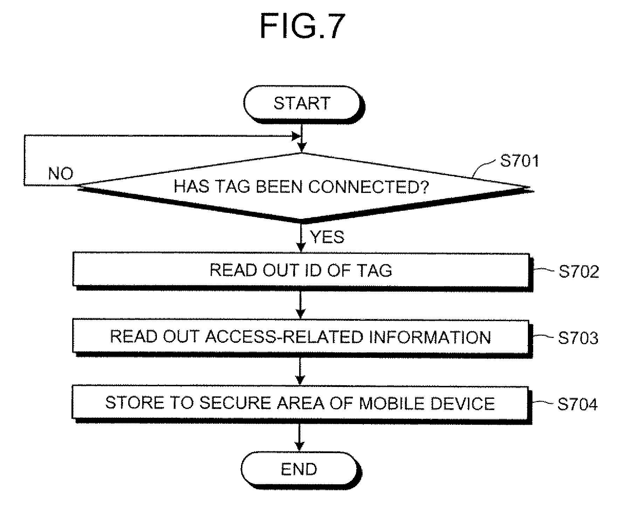

FIG. 7 is a flowchart illustrating a process at the first access of the mobile device to the tag. According to FIG. 7, the mobile device 410 waits until the tag 420 is connected to the mobile device 410 (step S701: NO). For instance, if communication is established by near field communication between the mobile device 410 and the tag 420, the communication between the mobile device 410 and the tag 420 starts when a user having the tag 420 gets in the vehicle 430.

When the tag 420 is connected (step S701: YES), the mobile device 410 reads out an ID of the tag 420 (step S702). The mobile device 410 reads out from the secure area of the tag 420 access-related information for accessing the home network 440 (step S703). The mobile device 410 correlates the ID with the access-related information and stores the ID and the access-related information (step S704), and the process of this flowchart ends.

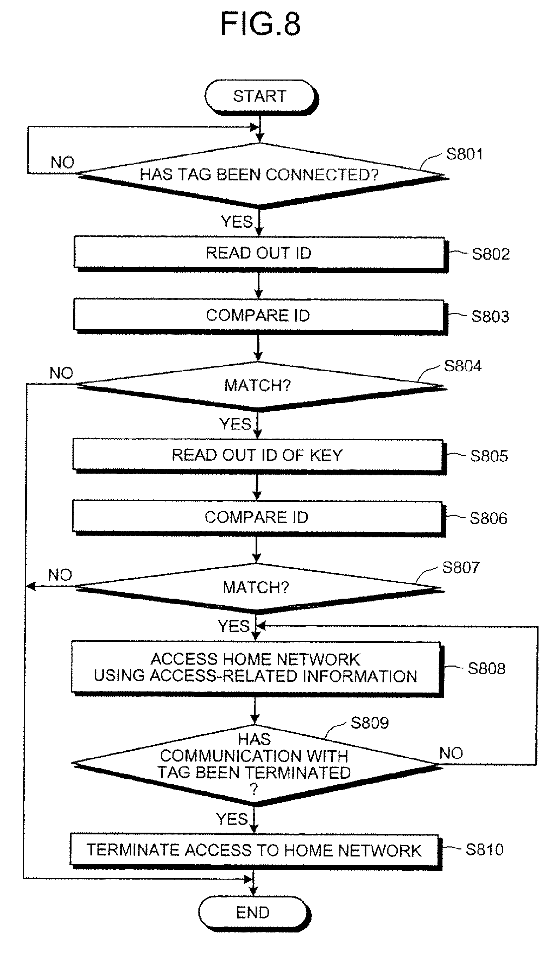

FIG. 8 is a flowchart illustrating a process for the mobile device to access to the home network. Before starting the process of the flowchart of FIG. 8, the mobile device 410 acquires an ID of the key 431 of the vehicle 430 in which the mobile device 410 is equipped, and stores the ID to the secure area.

According to the flowchart of FIG. 8, the mobile device 410 waits until the tag 420 is connected to the mobile device 410 (step S801: NO). When the tag 420 is connected (step S801: YES), the mobile device 410 reads out the ID of the tag 420 (step S802). The mobile device 410 compares the ID that has been read out with the ID that is stored in the mobile device 410 (step S803), and determines whether the IDs match (step S804).

If the IDs do not match (step S804: NO), the process of this flowchart ends. However, if the tag 420 connecting to the mobile device 410 stores therein the access-related information, the process of this flowchart may go to the process of FIG. 7.

If the IDs match (step S804: YES), the mobile device 410 reads out the ID of the key 431 of the vehicle 430 in which the mobile device 410 is equipped (step S805). The mobile device 410 compares the ID read out from the key 431 with the ID stored in the mobile device 410 (step S806), and determines whether the IDs of the key 431 match (step S807).

If the IDs of the key 431 match (step S807: YES), the mobile device 410 accesses the home network 440 using the access-related information stored in the secure area of the mobile device 410 (step 5808). If the IDs do not match (step S807: NO), the process of this flowchart ends.

Until the connection to the tag 420 is terminated (step S809: NO), the mobile device 410 returns to step S808 and maintains the connection with the home network 440. When the connection to the tag 420 is terminated (step S809: YES), the mobile device 410 terminates the connection to the home network 440 (step S810), ending the process of this flowchart.

The mobile device 410 may acquire from multiple tags 420, access-related information corresponding to multiple home networks 440. When multiple tags 420 are connected to the mobile device 410, the mobile device can access the home networks 440 related to the tags 420. For instance, when multiple passengers are on board the vehicle 430, each having a tag 420, a passenger can access home networks of the other passengers. In this way, content and information possessed by the passengers are shared in the vehicle 430.

As explained above, according to the communication system 400, a mobile device 410 can access a home network 440 only when identification information of a tag 420 can be acquired. In other words, when the mobile device 410 and the tag 420 can establish communication, a user of the mobile device 410 is considered to be an authenticated user who is allowed to access the home network 440. Consequently, a tangled authentication process can be eliminated and access to the home network 440 via the wide area network 450 is realized.

Further, according to the communication system 400, the access-related information is automatically obtained or created by the residential gateway 442 and is stored to the tag 420. As a result, a user can acquire information related to access without a bothersome process. Furthermore, according to the communication system 400, the mobile device 410 is not allowed to access the home network 440 if identification information uniquely assigned to a key 431 is not acquired. Consequently, unauthorized access to the home network 440 is prevented.

The access management method and the access method explained in the embodiments can be implemented by a computer, such as a personal computer and a workstation, executing a program that is prepared in advance. The program is recorded on a computer-readable recording medium such as a hard disk, a flexible disk, a CD-ROM, an MO, and a DVD, and is executed by being read out from the recording medium by a computer. The program can be a transmission medium that can be distributed through a network such as the Internet.

## Claims

1. An access management apparatus that manages access to a local network via a wide area network, the apparatus comprising:
an access information acquiring unit configured to acquire information (hereinafter "access information") that is used at access to the local network;
an authenticating unit configured to perform an authentication process for a portable storage device; and
a recording unit configured to store the access information acquired by the access information acquiring unit in a storage device authenticated by the authenticating unit.

2. The access management apparatus according to claim 1, wherein
the access information acquiring unit acquires at least one of an address of a device in the local network, authentication information used for authentication at access to the local network, and an encryption key used for encrypted communication with the local network.

3. A communication terminal that accesses a local network via a wide area network, the communication terminal comprising:
an access information acquiring unit configured to acquire information (hereinafter "access information") that is stored in a portable storage device and is used at access to the local network;
an identification information acquiring unit configured to acquire identification information uniquely assigned to the storage device; and
an access unit configured to access the local network using the access information acquired by the access information acquiring unit and the identification information acquired by the identification information acquiring unit.

4. The communication terminal according to claim 3, wherein
the access unit accesses the local network using the access information when the identification information is acquired from the storage device, and does not access the local network when the identification information is not acquired.

5. The communication terminal according to claim 4, wherein
the identification information acquiring unit acquires the identification information by near field communication with the storage device,
the access unit accesses the local network using the access information when the identification information is acquired from the storage device by the near field communication, and does not access the local network when the identification information is not acquired by the near field communication.

6. The communication terminal according to claim 4, comprising a recording unit configured to store the access information acquired by the access information acquiring unit, wherein
the access unit accesses the local network using the access information stored in the recording unit when the identification information is acquired from the storage device.

7. The communication terminal according to claim 3 wherein
the access information acquiring unit acquires from multiple storage devices access information used for accessing different local networks,
the identification acquiring unit acquires identification information uniquely assigned to the respective storage devices, and
the access unit, when the identification of the storage devices is acquired by the near field communication, accesses the local networks the access information of which is stored in the storage devices.

8. The communication terminal according to one of claims 3 to 7, wherein
the communication terminal is equipped in a vehicle,
the identification information acquiring unit acquires from a key of the vehicle identification information uniquely assigned to the key,
the access unit accesses the local network using the access information when the identification information is acquired from both the storage device and the key, and does not access the local network when the identification is not acquired.

9. An access management method for managing access to a local network via a wide area network, the method comprising:
acquiring information (hereinafter "access information") used at access to the local network;
authenticating a portable storage device; and
storing the access information acquired at the acquiring in a storage device authenticated at the authenticating.

10. An access method for accessing a local network via a wide area network, the method comprising:
acquiring from a portable storage device information (hereinafter "access information") used at access to the local network;
acquiring from the storage device identification information uniquely assigned to the storage device; and
accessing the local network using the access information and the identification information.

11. An access management program that causes a computer to execute the access management method of claim 9.

12. An access management program that causes a computer to execute the access method of claim 10.

13. A computer-readable recording medium that stores therein the access management program of claim 11 or the access management program of claim 12.
